(19) Europäisches Patentamt
European Patent Office
Office européen des brevets

(11) **EP 3 170 405 B1**

(12) **EUROPEAN PATENT SPECIFICATION**

(45) Date of publication and mention
of the grant of the patent:
**04.09.2024 Bulletin 2024/36**

(21) Application number: **15821616.8**

(22) Date of filing: **15.07.2015**

(51) International Patent Classification (IPC):
**A23L 5/00** *(2016.01)*   **A23L 19/00** *(2016.01)*
**A23L 17/00** *(2016.01)*   **A23P 20/10** *(2016.01)*

(52) Cooperative Patent Classification (CPC):
**A23P 20/10; A23L 29/10;** A23P 2020/251

(86) International application number:
**PCT/JP2015/070218**

(87) International publication number:
**WO 2016/010060 (21.01.2016 Gazette 2016/03)**

(54) **TEMPURA BATTER MIX**

TEMPURA-BACKTEIGMISCHUNG

MÉLANGE DE PÂTE À FRIRE POUR TEMPURA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.07.2014 JP 2014144792**

(43) Date of publication of application:
**24.05.2017 Bulletin 2017/21**

(73) Proprietor: **Nisshin Seifun Welna Inc.
Tokyo 101-8441 (JP)**

(72) Inventors:
• **FUJIMURA, Ryosuke
Tokyo 103-8544 (JP)**
• **NISHIDE, Tatsunori
Tokyo 103-8544 (JP)**

(74) Representative: **Wächtershäuser & Hartz
Patentanwaltspartnerschaft mbB
Weinstraße 8
80333 München (DE)**

(56) References cited:
| | |
|---|---|
| WO-A1-97/29653 | JP-A- 2000 308 462 |
| JP-A- 2008 067 675 | JP-A- 2008 067 675 |
| JP-A- 2008 253 145 | JP-A- 2011 103 838 |
| JP-A- 2011 125 332 | JP-A- H05 336 912 |
| JP-A- H08 140 610 | JP-A- H11 318 367 |
| JP-A- S5 716 663 | JP-B1- 5 265 821 |
| JP-B1- 5 494 900 | JP-B2- S4 627 333 |
| US-A- 6 010 736 | |

Remarks:
The file contains technical information submitted after the application was filed and not included in this specification

## Description

Technical Field

The present invention relates to a tempura batter mix.

Background Art

Tempura is a food obtained by adhering a batter, which is composed mainly of wheat flour and water, to ingredients such as seafood and vegetables and then deep-frying the ingredients in oil. The outer coating of tempura has a crisp texture, which is achieved by deep-frying in oil, while the ingredient inside the coating has a juicy taste and texture with *umami* (pleasant savory taste) trapped inside due to steam-like cooking. These features work together to create a nice unique taste and texture. The tempura coating should preferably have a so-called flower bloom-like, voluminous appearance (fluffiness), while it is required to have a crisp and crunchy texture.

A method generally used for making tempura includes flouring ingredients, then entirely covering the ingredients with a batter obtained by mixing wheat flour with water, and then deep-frying the ingredients in oil. Unfortunately, the batter becomes more viscous as the time elapses from the preparation, which results in low workability as well as a poor coating texture after deep-frying in oil. Therefore, in order to make fluffy tempura with a crisp texture, it is required, for example, to start cooking quickly after the preparation of a batter, to flour ingredients and adhere the ingredients with the batter in a proper amount, not too much or too little, and to further sprinkle an additional batter during deep-frying in the oil bath (in other words, putting an additional batter on the surface of tempura to increase the volume of the coating during deep-frying), which means that sophisticated skills and complicated procedures are necessary.

There have been proposed tempura batter mixes that have good workability or make it possible to prepare tempura having a coating with a good fluffiness and texture. For example, Patent Literature 1 discloses a tempura batter mix including: a heat-treated wheat flour having an R/E ratio of 8 to 12 as determined with Brabender Extensograph; and an emulsifying agent. Patent Literature 2 discloses a batter material that includes a heat-moisture-treated wheat flour having a degree of gelatinization of 12.5% to 30% and having a viscosity of 1 Pa·s to 10 Pa·s when the heat-moisture-treated wheat flour is added with 300% by mass of water based on the mass of the flour. Patent Literature 3 discloses that a mix for deep-frying includes a deep-frying batter composition containing a compression-treated starch and that the mix is used in the form of a batter with a viscosity of about 700 to about 1,500 Pa·s. Patent Literature 4 discloses a tempura batter mix flour containing a modified rice flour that is produced by applying at least one of compressive force, impact force, frictional force, and shearing force to rice grains or a rice flour and has a degree of swelling of 4.5 or more and a maximum gelatinization viscosity of 500 BU or less as determined by Amylograph. Patent Literature 4 also discloses that a batter is prepared to have a viscosity of 800 to 2,000 mPa when adding water thereto. Patent Literature 5 discloses a deep-frying batter composition including a batter material and a composite including crystalline cellulose and propylene glycol alginate. Patent Literature 5 also discloses that the viscosity of the batter used for tempura is adjuster to fall within the range of 100 to 10,000 mPa·s.

WO9729653 A1 discloses a tempura batter system which comprises a primer layer and batter matrix layer. The batter matrix is formed from a controlled gelling of batter-forming components.

Citation List

Patent Literatures

Patent Literature 1: JP 11-318366 A
Patent Literature 2: JP 2008-67675 A
Patent Literature 3: JP 2011-125332 A
Patent Literature 4: JP 2010-104246 A
Patent Literature 5: JP 2011-152087 A

Summary of Invention

Technical Problem

Unfortunately, the conventional batter material containing heat-treated wheat flour still remains unsatisfactory for simple preparation of tempura with a good appearance and texture, for example, because when deep-frying in oil without further sprinkling an additional batter, it results in insufficient fluffiness. In addition, the conventional batter material has a low adhesion property to non-floured ingredients and thus has a problem with workability.

Solution to Problem

The present invention provides a tempura batter mix that has a good adhesion property to ingredients and makes it possible to easily prepare tempura having a coating with a crisp texture and a fluffy voluminous appearance only by deep-frying in oil after dipping in a batter.

Specifically, the present invention provides a tempura batter mix comprising a grain flour and at least one emulsifying agent selected from the group consisting of a polyglycerol fatty acid ester, a sucrose fatty acid ester, lecithin and an organic acid monoglyceride, the tempura batter mix having a viscosity of 2 to 4.5 Pa·s when the tempura batter mix is added with 150% by mass of water at 15 °C based on the mass of the mix, and wherein the grain flour comprises a heat-moisture-treated soft wheat flour in the tempura batter mix in an amount of 15 to 25% by mass.

Advantageous Effects of Invention

The tempura batter mix of the present invention has a good adhesion property to ingredients. The tempura batter mix of the present invention can well adhere even to non-floured ingredients while the mix does not adhere to the ingredients in an excessive amount, but adheres in a suitable amount. The tempura batter mix of the present invention also makes it possible to form a tempura coating with a crisp texture and a fluffy voluminous appearance (fluffiness) only by deep-frying in oil after dipping in batter. According to the tempura batter mix of the present invention, it is capable of easily preparing fluffy tempura with a good texture, which would otherwise require sophisticated skills and complicated procedures in the conventional art.

Description of Embodiments

The tempura batter mix of the present invention comprises a grain flour and at least one emulsifying agent selected from the group consisting of a polyglycerol fatty acid ester, a sucrose fatty acid ester, lecithin, and an organic acid monoglyceride. In addition, the tempura batter mix of the present invention has a viscosity of 2 to 4.5 Pa·s, even more preferably 2.7 to 3.9 Pa·s, further more preferably 3.4 to 3.6 Pa·s, when the tempura batter mix is added with 150% by mass of water based on the mass of the mix. When the batter mix of the present invention can achieve a viscosity in the above ranges, the resulting batter can be adhered in a suitable amount to ingredients, and the resulting tempura can have a highly fluffy coating after deep-frying in oil.

Examples of the flour comprised in the tempura batter mix of the present invention include wheat flour, whole wheat flour, barley flour, rye flour, rice flour, sorghum flour, and corn flour, among which wheat flour is preferred. Examples of the wheat flour include soft flour, moderate flour, semi-hard flour, hard flour, and durum wheat flour, among which soft flour is preferred. The grain flour may have undergone a pressure treatment, a heat-moisture treatment, or a dry heat treatment, which is, however, not essential. Any one of these flours may be used alone or two or more in combination.

The tempura batter mix of the present invention may contain any one of the above grain flours alone or contain a combination of two or more of the above grain flours. The total content of the grain flour in the tempura batter mix of the present invention is preferably from 85 to 99.99% by mass, more preferably from 90 to 97% by mass, based on the total mass of the mix.

The flour contains a heat-moisture-treated wheat flour. This feature allows the tempura batter mix of the present invention to achieve the viscosity stated above. The heat-moisture-treated wheat flour is advantageous for the temporal stability of the viscosity of the batter.

The heat-moisture-treated wheat flour can be produced by a process including: subjecting a raw wheat flour to a heat-moisture treatment, which includes adding water or water vapor to the flour and heating the flour; then drying the treated flour; and optionally grinding the dried flour. The raw wheat flour may be a known wheat flour such as hard flour, moderate flour, soft flour, durum wheat flour, or durum semolina flour, or any mixture thereof. The heating medium is preferably superheated water vapor or saturated water vapor. Specifically, the heat-moisture-treated wheat flour is preferably produced by bringing superheated water vapor or saturated water vapor into direct contact with the raw wheat flour to heat it. As a more specific example, the heat-moisture-treated wheat flour can be produced by a process including: placing the raw wheat flour in a closed container heated by heating means such as a jacket; and, while stirring as needed, blowing superheated water vapor or saturated water vapor into the closed container to heat the raw wheat flour. The heating conditions are preferably a temperature of 50 to 160°C for a time of about 1 second to about 100 minutes. The heating conditions may be appropriately controlled so as to produce a heat-moisture-treated wheat flour with a desired degree of gelatinization. After the heat-moisture treatment, the drying may be performed by shelf drying, hot air drying, fluidized bed drying, or other drying methods. After drying, the grinding may be performed by various means such as roll grinding, pin mill grinding.

For ease of preparation of the batter, the heat-moisture-treated wheat flour for use in the present invention preferably has an average particle size of less than 400 um, more preferably 40 to 300 um, even more preferably 55 to 200 um. The heat-moisture-treated wheat flour with too large a particle size may be difficult to disperse in water in the process of preparing the batter. In the description, the average particle size of the heat-moisture-treated wheat flour means the volume average diameter measured by laser diffraction/scattering method using a particle size distribution analyzer. The particle size distribution analyzer may be, for example, Microtrack MT3000II (manufactured by NIKKISO CO. , LTD.). In order to adjust the average particle size of the heat-moisture-treated wheat flour to the above range, the heat-moisture-treated wheat flour after heating or grinding may be classified into desired sizes using known means such as a sieve or a classifier.

The heat-moisture-treated wheat flour for use in the present invention preferably has a degree of gelatinization of 8 to 35%, more preferably 12.5 to 30%. The content of the heat-moisture-treated wheat flour in the tempura batter mix of the present invention is 15 to 25% by mass.

Gelatinized starch which may be used in the tempura batter mix of the present invention may be obtained by subjecting starch, such as corn starch, waxy corn starch, tapioca starch, potato starch, wheat starch, or rice starch, to gelatinization using general means. The gelatinized starch preferably has a degree of gelatinization of 30 to 95%, more preferably a degree of gelatinization f 40 to 90%. The content of the gelatinized starch in the tempura batter mix of the present invention is preferably from 0.5 to 20% by mass, more preferably from 1 to 15% by mass, even more preferably from 2 to 12% by mass.

For example, the mix of the present invention contains 15 to 25% by mass of the heat-moisture-treated wheat flour, and the content of the grain flour including the heat-moisture-treated wheat flour in the mix or the total content of the grain flour including the heat-moisture-treated flour and the starch in the mix is preferably from 85 to 99.99% by mass, more preferably from 90 to 97% by mass.

When the heat-moisture-treated wheat flour and the gelatinized starch are used in combination in the tempura batter mix of the present invention, a mass ratio of the heat-moisture-treated wheat flour to the gelatinized starch is preferably about 10 : 1 to about 1:1. For example, 10 to 25% by mass of the heat-moisture-treated wheat flour may be used in combination with about 2.5 to about 10% by mass of the gelatinized starch. For example, the content of the heat-moisture-treated wheat flour in the mix of the present invention may be from 10 to 25% by mass, the content of the gelatinized starch in the mix of the present invention may be from 2.5 to 10% by mass, and the total content of the grain flour and/ or the starch, including the heat-moisture-treated wheat flour and the gelatinized starch in the mix of the present invention may be from 85 to 99.99% by mass.

In addition to the heat-moisture-treated wheat flour or the gelatinized starch, a thickening agent may be added to the tempura batter mix of the present invention in order to control the viscosity. Examples of the thickening agent include thickening polysaccharides such as xanthan gum, tamarind gum, guar gum, pectin, and carrageenan, and gelatin.

In the tempura batter mix of the present invention, the emulsifying agent is one or a combination of two or more selected from the group consisting of a polyglycerol fatty acid ester, a sucrose fatty acid ester, lecithin, and an organic acid monoglyceride. In this regard, the polyglycerol fatty acid ester is an ester of a fatty acid and polyglycerol, which is a polymer of glycerol. The sucrose fatty acid ester is an ester of a fatty acid and sucrose. Lecithin is a triglyceride with one fatty acid replaced by a phosphoric acid compound. The organic acid monoglyceride is an ester of an organic acid and glycerin. Examples of the organic acid include acetic acid, lactic acid, citric acid, succinic acid, and diacetyltartaric acid, among which citric acid is preferred. The content of the emulsifying agent in the tempura batter mix of the present invention is preferably from 0.01 to 4% by mass, more preferably from 0.01 to 3% by mass, even more preferably from 0.03 to 1% by mass, based on the total mass of the mix. If the content of the emulsifying agent is less than 0.01% by mass, the resulting tempura coating after deep-frying in oil may tend to be less fluffy or to have a hard texture. On the other hand, if the content of the emulsifying agent is more than 4% by mass, the resulting batter may tend to have reduced low adhesion property to ingredients.

In addition to the grain flour, the starch and the emulsifying agent, an oil/fat-treated starch is preferably added to the tempura batter mix of the present invention so that the resulting tempura coating can have a further improved adhesion property and fluffiness. The oil/fat-treated starch refers to a starch with a small amount of oil and/or fat adhering to the surface thereof. The oil/fat-treated starch for use in the present invention can be prepared by mixing 100 parts by mass of starch and 0.01 to 30 parts by mass of oil and/or fat homogenously and then drying the mixture. If necessary, the mixture may be heat-treated before or after drying.

The type of starch as a raw material for the oil/fat-treated starch is not particularly limited, examples of which include those listed above, such as unmodified starches such as corn starch, waxy corn starch, tapioca starch, potato starch, wheat starch, and rice starch, and modified starches such as gelatinization products, etherification products, esterification products, crosslinking products, and oxidation products of these starches. Any one of these starches may be used alone or two or more in combination. The type of oil and/or fat to be mixed with the raw starch is not particularly limited, examples of which include soybean oil, rapeseed oil, cottonseed oil, safflower oil, sunflower oil, rice oil, corn oil, palm oil, perilla oil, beef tallow, and lard. Any one of these may be used alone or two or more in combination. An oil-rich grain flour, such as non-defatted soy flour, may also be used as a partial or entire alternative to the edible oil and/or fat.

The content of the oil/fat-treated starch in the tempura batter mix of the present invention is preferably 30% by mass or less, more preferably from 5 to 20% by mass, based on the total mass of the mix. If the content of the oil/fat-treated starch is more than 30% by mass, the effect of improving the fluffiness or texture of tempura coating may tend to decrease.

If necessary, the tempura batter mix of the present invention may further contain other materials commonly used in tempura batter mixes, such as materials selected from, for example, baking powders; egg powders such as egg white powders and whole egg powders; proteins; seasonings such as salt, soy sauce powders, fermented seasonings, saccharides and amino acids; spices; flavors; nutrients such as vitamins; colorants; and powdered oils and fats. The type and amount of these other materials may be adjusted as appropriate depending on the desired properties of tempura and other factors.

The tempura batter mix of the present invention can be produced by mixing the grain flour and/or the starch, the emulsifying agent, and optionally the oil/fat-treated starch and other materials. The tempura batter mix of the present invention may be, but not limited to, in the form of a powder or granules.

A process of making tempura using the tempura batter mix of the present invention may include previously preparing a batter containing the batter mix of the present invention, adhering the batter to an ingredient, and then deep-frying the ingredient in oil. The batter for use in making tempura can be prepared, for example, by adding 100 to 200 parts by mass, preferably 120 to 190 parts by mass, more preferably 135 to 175 parts by mass of a liquid such as water to 100 parts by mass of the batter mix of the present invention and mixing them. It should be noted that the amount of the liquid such as water may be adjusted depending on the type of ingredients for tempura. In this process, the viscosity of the batter is preferably adjusted to 2 to 4.5 Pa·s, more preferably 2.7 to 3.9 Pa·s, even more preferably 3.4 to 3.6 Pa·s. The batter with a viscosity in these ranges can have an improved adhesion property to ingredients and can form a fluffier tempura coating. In the description, the viscosity of the batter refers to a value obtained by measuring the viscosity of the batter having a temperature of 15°C to 25°C using a B-type viscometer.

Examples of the ingredient include, but are not limited to, seafood such as prawn and shrimp, squid, and sea-gudgeon, meat such as chicken, pork, and beef, and vegetables such as potatoes, eggplants, pumpkins, carrots, onions, and mushrooms, among which seafood and vegetables are preferred. The ingredient may be floured before the batter is adhered to the ingredient, although it is not essential.

The process of adhering the batter to the surface of the ingredient may include dipping the ingredient in the batter or applying or spraying the batter on the ingredient. According to conventional methods, the ingredient adhered with the batter may then be deep-fried in oil at 160 to 180°C for about 2 to about 8 minutes to make tempura.

The tempura prepared using the tempura batter mix of the present invention is of high quality, having a coating with a crisp texture and a fluffy appearance, even without flouring the ingredient in advance or without further sprinkling an additional batter during deep-frying in oil.

In the description, the degree of gelatinization of the grain flour or the starch and the viscosity of a batter containing the tempura batter mix are values determined as described below.

<Measurement of degree of gelatinization>

The degree of gelatinization (also called the degree of pregelatinization) is measured by β-amylase-pullulanase method or β-amylase-amyloglucosidase method, which is conventional in the art. Hereinafter, the procedure of β-amylase-amyloglucosidase method will be described.

(A) Reagents

The reagents to be used are as follows:

(1) 0.8 M acetic acid-sodium acetate buffer
(2) 10 N sodium hydroxide solution
(3) 2 N acetic acid solution
(4) Enzyme solution obtained by dissolving 0.017 g of β-amylase (#1500S, Nagase ChemteX Corporation) and 0.005 g of amyloglucosidase (10115-1G-F, Sigma Aldrich) in reagent (1) (0.8 M acetic acid-sodium acetate buffer) to make a 200 mL solution
(5) Deactivated enzyme solution prepared by boiling reagent (4) (enzyme solution) for 10 minutes
(6) Somogyi reagent and Nelson reagent (reagents for measuring reducing sugar content)

(B) Measurement method

(1) A flour or starch sample is ground into 100 meshes or finer using a homogenizer. The ground powder is added in an amount of 0.08 to 0.10 g to a glass homogenizer.
(2) To the glass homogenizer, 8.0 mL of demineralized water is added, and the mixture is dispersed by allowing the glass homogenizer to move up and down 10 to 20 times.
(3) Two mL aliquots of the dispersion prepared in the step (2) are added to each of two 25-mL-volume graduated test tubes. Subsequently, one of the aliquots is diluted to a certain volume with the 0.8 M acetic acid-sodium acetate buffer and then used as a test fraction.
(4) To the other aliquot, 0.2 mL of the 10 N sodium hydroxide solution is added and then allowed to react at 50°C for 3 to 5 minutes so that the aliquot is completely gelatinized. Subsequently, after 1.0 mL of the 2 N acetic acid solution is added to the aliquot to adjust the pH to around 6.0, the aliquot is diluted to a certain volume with the 0.8 M acetic acid-sodium acetate buffer and then used as a gelatinized fraction.
(5) A sample solution is taken in an amount of 0.4 mL from each of the test fraction and the gelatinized fraction prepared in the steps (3) and (4). Subsequently, 0.1 mL of the enzyme solution is added to each of the sample solution and then subjected to enzyme reaction at 40°C for 30 minutes. At the same time, a blank is prepared by adding 0.1 mL of the deactivated enzyme instead of the enzyme solution to each of the sample solution. The enzyme reaction is performed while the reaction liquid is intermittently stirred during the reaction.
(6) To 0.5 mL of the reaction liquid, 0.5 mL of the Somogyi reagent is added and then boiled in a boiling bath for 15 minutes. After boiling, the sample solution is cooled in flowing water for 5 minutes, and then 1.0 mL of the Nelson reagent is added to the sample solution and stirred. The mixture is then allowed to stand for 15 minutes.
(7) Subsequently, 8.00 mL of demineralized water is added to the mixture and then stirred. The mixture is then measured for absorbance at 500 nm.

(C) Calculation of degree of gelatinization

The following formula is used to calculate the degree of gelatinization.

$$\text{Degree (\%) of gelatinization} = \frac{\text{Degree of decomposition of test sample solution}}{\text{Degree of decomposition of completely gelatinized sample solution}} \times 100 = \frac{(A-a)}{(A'-a')} \times 100$$

A = Absorbance of test fraction
A' = Absorbance of gelatinized fraction
a = Absorbance of blank for test fraction
a' = Absorbance of blank for gelatinized fraction

<Measurement of viscosity>

The tempura batter mix of the present invention and cold water are prepared (100 to 200 parts by mass of cold water at about 15°C relative to 100 parts by mass of the mix).

(A) Preparation of batter

The cold water is poured into a bowl (manufactured by Hobart), and the tempura batter mix of the present invention is added onto the cold water. The mix and the water are mixed thoroughly by appropriately stirring with a wire whip (manufactured by Hobart). Subsequently, they are stirred firstly for 30 seconds and secondly for 240 seconds with a mixer (manufactured by Hobart).

(B) Measurement method

Ten minutes after stirring with the mixer, the viscosity of the resulting mixture is measured using a BM-type viscometer.

Examples

Hereinafter, the present invention will be more specifically described with reference to examples. It will be understood that the examples are not intended to limit the present invention.

(Reference Examples 1 to 3)

Soft wheat flour (Flour, manufactured by Nisshin Flour Milling Inc.) was introduced into a closed high-speed mixing machine with its temperature maintained by using a jacket and saturated water vapor was introduced at different temperatures for different blowing periods of time into the mixing machine to carry out heat-moisture treatment, to thereby obtain heat-moisture-treated wheat flours of Reference Examples 1 to 3.

(Reference Example 4)

Soft wheat flour (Flour, manufactured by Nisshin Flour Milling Inc.) was sealed in a pouch and then heat-treated with superheated water vapor at 150°C, to thereby obtain heat-moisture-treated wheat four of Reference Example 4.
Table 1 shows the degree of gelatinization of each of the heat-moisture-treated wheat flours of Reference Examples 1 to 4. Each heat-moisture-treated wheat flour had an average particle size in the range of 61 to 97 um.

[Table 1]

|  | Reference Example 1 | Reference Example 2 | Reference Example 3 | Reference Example 4 |
|---|---|---|---|---|
| Degree of gelatinization | 8.8 | 18.5 | 31.2 | 10.3 |

(Preparation Examples 1 to 14)

Tempura batter mixes of Preparation Examples 1 to 14 were each prepared by mixing the materials shown in Table 2.

(Test Example 1)

A batter was prepared by mixing 100 g of each of the tempura batter mixes of Preparation Examples 1 to 14 with 150 cc of water and then measured for viscosity. Deshelled prawn with tail (20 g per prawn) were dipped in each batter to be adhered well. The batter-adhered prawns were deep-fried for 2 minutes in salad oil heated at 170°C. The obtained tempura pieces were taken out of the oil bath, drained oil off, and then allowed to stand at room temperature (about 25°C) for 5 minutes. Subsequently, the quality of the tempura pieces was evaluated by 10 panelists based on the evaluation criteria shown in Table 3, and then the scores were averaged. Table 2 shows the viscosities of the batters and the evaluation results.

[Table 2]

| Mix formulation | Preparation Example | | | | | | | | | | | | | |
|---|---|---|---|---|---|---|---|---|---|---|---|---|---|---|
| | 1+ | 2+ | 3+ | 4 | 5+ | 6 | 7+ | 8 | 9+ | 10+ | 11 | 12+ | 13+ | 14+ |
| Wheat flour *1 | 99 | 90 | 94 | 79 | - | 79 | - | 79 | - | - | 79 | - | 59 | 80 |
| Potato starch *2 | - | 4 | - | - | 91.5 | - | 74 | - | 74 | 71.5 | - | 70 | - | - |
| Gelatinized starch *3 | - | 5 | 5 | - | 7.5 | - | 5 | - | 5 | 7.5 | - | 29 | - | - |
| Heat-moisture-treate d wheat flour | - | - | - | 20*5 | - | 20*8 | 20*5 | 20*6 | 20*6 | 20*6 | 20*7 | - | 40*6 | 20*6 |
| Polyglycerol fatty acid ester *4 | 1 | 1 | 1 | 1 | 1 | 1 | 1 | 1 | 1 | 1 | 1 | 1 | 1 | - |
| Total | 100 | 100 | 100 | 100 | 100 | 100 | 100 | 100 | 100 | 100 | 100 | 100 | 100 | 100 |
| Viscosity (Pa·s) | 1.1 | 1.6 | 2.0 | 2.2 | 2.4 | 2.7 | 3.1 | 3.2 | 3.5 | 3.9 | 4.5 | 4.9 | 5.4 | 3.4 |
| Appearance of tempura | 1.5 | 1.6 | 3.8 | 4.0 | 3.8 | 4.2 | 4.2 | 4.2 | 4.5 | 4.2 | 3.8 | 1.9 | 1.9 | 1.4 |
| Texture of tempura | 3.5 | 2.6 | 3.9 | 3.9 | 3.9 | 4.1 | 4.2 | 4.2 | 4.3 | 4.1 | 3.6 | 1.2 | 1.3 | 1.3 |

+ : Preparation Example not according to the present invention.
*1: Flour, manufactured by Nisshin Flour Milling Inc.
*2: Marutoku Shihoro, produced by Shihoro-cho
*3: Tapioca Alfa, manufactured by Sanwa Starch Co., Ltd.
*4: Poem DS-100A, manufactured by RIKEN VITAMIN Co., Ltd.
*5: Ref. Ex. 1 (degree of gelatinization 8.8%)
*6: Ref. Ex. 2 (degree of gelatinization 18.5%)
*7: Ref. Ex. 3 (degree of gelatinization 31.2%)
*8: Ref. Ex. 4 (degree of gelatinization 10.3%) Agricultural Cooperative Association

[Table 3]

| | | |
|---|---|---|
| Appearance of tempura | 5 | Sufficiently voluminous appearance with suitable level of fluffy roughness |
| | 4 | Voluminous appearance with fluffy roughness in part |
| | 3 | Non-fluffy appearance with roughness in part |
| | 2 | Non-fluffy appearance with slightly insufficient roughness and volume |
| | 1 | Entirely smooth coating with insufficient roughness and volume |
| Texture of tempura | 5 | Excellent coating with high crispness and crunchiness |
| | 4 | Good coating with crispness |
| | 3 | Coating somewhat lacking crispness |
| | 2 | Slightly hard or sticky coating with low crispness |
| | 1 | Bad coating with no crispness, too hard or very sticky |

(Preparation Examples 15 to 20)

Tempura batter mixes of Preparation Examples 15 to 20 were each prepared by mixing the raw materials shown in Table 4.

(Test Example 2)

As in Test Example 1, a batter was prepared from each of the tempura batter mixes of Preparation Examples 15 to 20 and then measured for viscosity. As in Test Example 1, prawn tempura pieces were prepared using each batter and then evaluated for quality. Table 4 shows the results. Note that Table 4 shows again the results of Preparation Examples 8 and 14.

[Table 4]

| Mix formulation | Preparation Example | | | | | | | |
|---|---|---|---|---|---|---|---|---|
| | 14 | 15 | 16 | 17 | 8 | 18 | 19 | 20 |
| Heat-moisture-treated wheat flour (Reference Example 2) | 20 | 20 | 20 | 20 | 20 | 20 | 20 | 20 |
| Polyglycerol fatty acid ester *1 | - | 0.005 | 0.01 | 0.03 | 1 | 2 | 3 | 4 |
| Wheat flour *3 | Balance | Balance | Balance | Balance | Balance | Balance | Balance | Balance |
| Total | 100 | 100 | 100 | 100 | 100 | 100 | 100 | 100 |
| Viscosity (Pa s) | 3.4 | 3.3 | 3.3 | 3.3 | 3.2 | 2.9 | 2.8 | 2.8 |
| Appearance of tempura | 1.4 | 3.7 | 4.1 | 4.3 | 4.2 | 4.0 | 4.1 | 3.8 |
| Texture of tempura | 1.3 | 3.6 | 3.8 | 4.0 | 4.2 | 3.9 | 3.7 | 3.5 |
| *1: Poem DS-100A, manufactured by RIKEN VITAMIN Co., Ltd. *2: Ryoto Sugar Ester S-370, manufactured by Mitsubishi-Kagaku Foods Corporation *3: Flour, manufactured by Nisshin Flour Milling Inc. | | | | | | | | |

(Preparation Examples 21 to 25)

Tempura batter mixes of Preparation Examples 21 to 25 were each prepared by mixing the raw materials shown in Table 5. The oil/fat-treated starch used in these preparation examples was produced by adding 0.2 parts by mass of salad oil to 99.98 parts by mass of phosphate-crosslinked tapioca starch (manufactured by Matsutani Chemical Industry Co., Ltd.), mixing them uniformly, and then drying the mixture.

(Test Example 3)

As in Test Example 1, a batter was prepared from each of the tempura batter mixes of Preparation Examples 21 to 25 and then measured for viscosity. As in Test Example 1, prawn tempura pieces were prepared using each batter and then evaluated for quality. Table 5 shows the results. Note that Table 5 shows again the results of Preparation Example 8.

[Table 5]

| Mix formulation | Preparation Example | | | | | |
|---|---|---|---|---|---|---|
| | 8 | 21 | 22 | 23 | 24 | 25 |
| Heat-moisture-treated wheat flour (Reference Example 2) | 20 | 20 | 20 | 20 | 20 | 20 |
| Polyglycerol fatty acid ester *1 | 1 | 1 | 1 | 1 | 1 | 1 |
| Oil/fat-treated starch | - | 5 | 10 | 20 | 30 | 40 |
| Wheat flour *2 | Balance | Balance | Balance | Balance | Balance | Balance |
| Total | 100 | 100 | 100 | 100 | 100 | 100 |
| Viscosity (Pa·s) | 3.2 | 3.3 | 3.3 | 3.4 | 3.5 | 3.6 |
| Appearance of tempura | 4.2 | 4.5 | 4.7 | 4.8 | 4.6 | 4.3 |
| Texture of tempura | 4.2 | 4.4 | 4.5 | 4.6 | 4.3 | 4.0 |
| *1: Poem DS-100A, manufactured by RIKEN VITAMIN Co., Ltd. *2: Flour, manufactured by Nisshin Flour Milling Inc. | | | | | | |

(Preparation Examples 26 to 29)

Tempura batter mixes of Preparation Examples 26 to 29 were each prepared by mixing the raw materials shown in Table 6.

(Test Example 4)

As in Test Example 1, a batter was prepared from each of the tempura batter mixes of Preparation Examples 26 to 29 and then measured for viscosity. As in Test Example 1, prawn tempura pieces were prepared using each batter and then evaluated for quality. Table 6 shows the results. Note that Table 6 shows again the results of Preparation Example 8.

[Table 6]

| Mix formulation | Preparation Example | | | | |
|---|---|---|---|---|---|
| | 8 | 26 | 27 | 28 | 29 |
| Heat-moisture-treated wheat flour (Reference Example 2) | 20 | 20 | 20 | 20 | 20 |
| Polyglycerol fatty acid ester *1 | 1 | - | - | - | - |
| Sucrose fatty acid ester *2 | - | 1 | - | - | - |
| Lecithin *3 | - | - | 1 | - | - |
| Organic acid monoglyceride *4 | - | - | - | 1 | - |
| Glycerol fatty acid ester *5 | - | - | - | - | 1 |
| Wheat flour *6 | Balance | Balance | Balance | Balance | Balance |

(continued)

| Mix formulation | Preparation Example | | | | |
|---|---|---|---|---|---|
| | 8 | 26 | 27 | 28 | 29 |
| Total | 100 | 100 | 100 | 100 | 100 |
| Viscosity (Pa·s) | 3.2 | 3.1 | 3.3 | 3.3 | 3.2 |
| Appearance of tempura | 4.2 | 4.1 | 3.9 | 4.0 | 2.3 |
| Texture of tempura | 4.2 | 3.9 | 3.8 | 3.6 | 2.1 |

*1: Poem DS-100A, manufactured by RIKEN VITAMIN Co., Ltd.
*2: Ryoto Sugar Ester S-370, manufactured by Mitsubishi-Kagaku Foods Corporation
*3: Lecion P, manufactured by RIKEN VITAMIN Co., Ltd.
*4: Poem B-10, manufactured by RIKEN VITAMIN Co., Ltd.
*5: Emulsy MS Powder, manufactured by RIKEN VITAMIN Co., Ltd.
*6: Flour, manufactured by Nisshin Flour Milling Inc.

**Claims**

1. A tempura batter mix comprising:

   a grain flour; and
   at least one emulsifying agent selected from the group consisting of a polyglycerol fatty acid ester, a sucrose fatty acid ester, lecithin, and an organic acid monoglyceride,
   the tempura batter mix having a viscosity of 2 to 4.5 Pa·s when the tempura batter mix is added with 150% by mass of water at 15°C based on the mass of the mix,
   wherein the grain flour comprises a heat-moisture-treated soft wheat flour, wherein the content of the heat-moisture-treated soft wheat flour in the tempura batter mix is 15 to 25% by mass.

2. The tempura batter mix according to claim 1, which further comprises a starch.

3. The tempura batter mix according to claim 2, which comprises 2 to 12% by mass of a gelatinized starch.

4. The tempura batter mix according to any one of claims 1 to 3, wherein the heat-moisture-treated soft wheat flour has a degree of gelatinization of 8 to 35%.

5. The tempura batter mix according to any one of claims 1 to 4, which comprises 85 to 99.99% by mass of the grain flour and any starch.

6. The tempura batter mix according to any one of claims 1 to 5, which comprises 0.01 to 4% by mass of the emulsifying agent.

7. The tempura batter mix according to any one of claims 1 to 6, further comprising not more than 30% by mass of an oil/fat-treated starch.

8. A use of a composition comprising:

   a grain flour and optionally a starch; and
   at least one emulsifying agent selected from the group consisting of a polyglycerol fatty acid ester, a sucrose fatty acid ester, lecithin, and an organic acid monoglyceride,
   the composition having a viscosity of 2 to 4.5 Pa·s when the composition is added with 150% by mass of water at 15°C based on the mass of the composition, wherein the grain flour comprise from 15 to 25% by mass in the composition of a heat-moisture-treated soft wheat flour and any starch comprises 2 to 12% by mass in the composition of a gelatinized starch,
   the total content of the grain flour and any starch, including the heat-moisture-treated wheat flour and gelatinized starch, is from 85 to 99.99% by mass, and the content of the emulsifying agent is from 0.01 to 4% by mass for providing a tempura batter mix.

9. Use of the tempura batter mix according to any one of claims 1 to 7 for the preparation of a tempura batter.

10. A method for preparing a tempura batter, comprising mixing 100 parts by mass of the tempura batter mix according to any one of claims 1 to 7 with 100 to 200 parts by mass of water.

11. A tempura batter comprising 100 parts by mass of the tempura batter mix according to any one of claims 1 to 7 and water, and having a viscosity of 2 to 4.5 Pa s.

12. A method for preparing tempura, comprising: adhering the tempura batter according to claim 11 to an ingredient; and then deep-frying the ingredient in oil.

**Patentansprüche**

1. Tempura-Teigmischung umfassend: ein Getreidemehl und wenigstens einen Emulgator, ausgewählt aus der Gruppe, bestehend aus einem Polyglycerinfettsäureester, einem Saccharosefettsäureester, Lecithin und einem organischen Säuremonoglycerid, wobei die Tempura-Teigmischung eine Viskosität von 2 bis 4,5 Pa s aufweist, wenn der Tempura-Teigmischung 150 Massenprozent Wasser bei 15°C, bezogen auf die Masse der Mischung, zugesetzt werden, wobei das Getreidemehl wenigstens ein mit Wärme und Feuchtigkeit behandeltes Weichweizenmehl umfasst, wobei der Gehalt des mit Wärme und Feuchtigkeit behandelten Weichweizenmehls in der Tempura-Teigmischung 15 bis 25 Massenprozent beträgt.

2. Tempura-Teigmischung nach Anspruch 1, die ferner eine Stärke umfasst.

3. Tempura-Teigmischung nach Anspruch 2, die 2 bis 12 Massenprozent gelatinierte Stärke umfasst.

4. Tempura-Teigmischung nach einem der Ansprüche 1 bis 3, wobei das mit Wärme und Feuchtigkeit behandelte Weichweizenmehl einen Gelatinierungsgrad von 8 bis 35 % aufweist.

5. Tempura-Teigmischung nach einem der Ansprüche 1 bis 4, die 85 bis 99,99 Massenprozent des Getreidemehls und einer beliebigen Stärke umfasst.

6. Tempura-Teigmischung nach einem der Ansprüche 1 bis 5, die 0,01 bis 4 Massenprozent des Emulgators umfasst.

7. Tempura-Teigmischung nach einem der Ansprüche 1 bis 6, die ferner nicht mehr als 30 Massenprozent einer mit Öl/Fett behandelten Stärke umfasst.

8. Verwendung einer Zusammensetzung, umfassend:

   ein Getreidemehl und wahlweise eine Stärke; und
   wenigstens einen Emulgator, ausgewählt aus der Gruppe, bestehend aus einem Polyglycerinfettsäureester, einem Saccharosefettsäureester, Lecithin und einem organischen Säuremonoglycerid, wobei die Zusammensetzung eine Viskosität von 2 bis 4,5 Pa s aufweist, wenn der Zusammensetzung 150 Massenprozent Wasser bei 15°C, bezogen auf die Masse der Zusammensetzung, zugesetzt werden, wobei das Getreidemehl von 15 bis 25 Massenprozent in der Zusammensetzung eines mit Wärme und Feuchtigkeit behandelten Weichweizenmehls umfasst und die beliebige Stärke 2 bis 12 Massenprozent in der Zusammensetzung einer gelatinierten Stärke umfasst, wobei der Gesamtgehalt des Getreidemehls und der beliebigen Stärke, einschließlich des mit Wärme und Feuchtigkeit behandelten Weizenmehls und der gelatinierten Stärke, von 85 bis 99,99 Massenprozent beträgt und der Gehalt des Emulgators von 0,01 bis 4 Massenprozent beträgt, um eine Tempura-Teigmischung bereitzustellen.

9. Verwendung der Tempura-Teigmischung nach einem der Ansprüche 1 bis 7 zur Herstellung eines Tempurateigs.

10. Verfahren zur Herstellung eines Tempurateigs, umfassend das Mischen von 100 Massenteilen der Tempura-Teigmischung nach einem der Ansprüche 1 bis 7 mit 100 bis 200 Massenteilen Wasser.

**11.** Tempurateig, umfassend 100 Massenteile der Tempura-Teigmischung nach einem der Ansprüche 1 bis 7 und Wasser und der eine Viskosität von 2 bis 4,5 Pa s aufweist.

**12.** Verfahren zur Herstellung von Tempura, umfassend: Anhaften des Tempura-Teigs nach Anspruch 11 an eine Zutat; und anschließendes Frittieren der Zutat in Öl.

**Revendications**

**1.** Mélange de pâte à frire pour tempura comprenant :

une farine de grain ; et
au moins un agent émulsifiant sélectionné parmi le groupe consistant en un ester de polyglycérol d'acide gras, un ester de saccharose d'acide gras, une lécithine et un monoglycéride d'acide organique,
le mélange de pâte à frire pour tempura présentant une viscosité de 2 à 4,5 Pa·s lorsque le mélange de pâte à frire pour tempura est ajouté à 150 % en masse d'eau à 15 °C sur la base de la masse du mélange,
dans lequel la farine de grain comprend une farine de blé tendre traitée à la chaleur et à l'humidité, dans lequel la teneur en farine de blé tendre traitée à la chaleur et à l'humidité dans le mélange de pâte à frire pour tempura est de 15 à 25 % en masse.

**2.** Mélange de pâte à frire pour tempura selon la revendication 1, qui comprend en outre un amidon.

**3.** Mélange de pâte à frire pour tempura selon la revendication 2, qui comprend 2 à 12 % en masse d'un amidon gélatinisé.

**4.** Mélange de pâte à frire pour tempura selon l'une des revendications 1 à 3, dans lequel la farine de blé tendre traitée à la chaleur et à l'humidité présente un degré de gélatinisation de 8 à 35 %.

**5.** Mélange de pâte à frire pour tempura selon l'une des revendications 1 à 4, qui comprend 85 à 99,99 % en masse de la farine de grain et d'un amidon.

**6.** Mélange de pâte à frire pour tempura selon l'une des revendications 1 à 5, qui comprend 0,01 à 4 % en masse de l'agent émulsifiant.

**7.** Mélange de pâte à frire pour tempura selon l'une des revendications 1 à 6, comprenant en outre pas plus de 30 % en masse d'un amidon traité par huile/graisse.

**8.** Utilisation d'une composition comprenant :

une farine de grain et optionnellement un amidon ; et
au moins un agent émulsifiant sélectionné parmi le groupe consistant en un ester de polyglycérol d'acide gras, un ester de saccharose d'acide gras, une lécithine et un monoglycéride d'acide organique,
la composition présentant une viscosité de 2 à 4,5 Pa·s lorsque la composition est ajoutée à 150 % en masse d'eau à 15 °C sur la base de la masse de la composition, dans laquelle la farine de grain comprend de 15 à 25 % en masse dans la composition d'une farine de blé tendre traitée à la chaleur et à l'humidité et un amidon comprend 2 à 12 % en masse dans la composition d'un amidon gélatinisé, la teneur totale en farine de grain et en amidon, comprenant la farine de blé traitée à la chaleur et à l'humidité et l'amidon gélatinisé, est de 85 à 99,99 % en masse, et la teneur en agent émulsifiant est de 0,01 à 4 % en masse pour fournir un mélange de pâte à frire pour tempura.

**9.** Utilisation du mélange de pâte à frire pour tempura selon l'une des revendications 1 à 7 pour la préparation d'une pâte à frire pour tempura.

**10.** Procédé de préparation d'une pâte à frire pour tempura, comprenant de mélanger 100 parties en masse du mélange de pâte à frire pour tempura selon l'une des revendications 1 à 7 avec 100 à 200 parties en masse d'eau.

**11.** Pâte à frire pour tempura comprenant 100 parties en masse du mélange de pâte à frire pour tempura selon l'une des revendications 1 à 7 et de l'eau, et présentant une viscosité de 2 à 4,5 Pa·s.

12. Procédé de préparation d'une tempura, comprenant : adhérer la pâte à frire pour tempura selon la revendication 11 à un ingrédient ; et faire frire l'ingrédient dans l'huile.

**EP 3 170 405 B1**

**REFERENCES CITED IN THE DESCRIPTION**

**Patent documents cited in the description**

- WO 9729653 A1
- JP 11318366 A
- JP 2008067675 A

- JP 2011125332 A
- JP 2010104246 A
- JP 2011152087 A